# EUROPEAN PATENT APPLICATION

(11) **EP 3 012 512 A1**
(43) Date of publication of application: **27.04.2016**
(21) Application number: 14196101.1
(22) Date of filing: 03.12.2014
(51) Int. Cl.: F21K 99/00, H05B 33/08

(54) **LED lamp with dual mode operation**

(30) Priority: 20.10.2014 US 201462066306 P; 26.11.2014 US 201414555294
(71) Applicant: Energy Focus Inc., Solon, OH 44139 (US)
(72) Inventor: Davenport, John M., Tuscon, AZ Arizona 85743 (US); Bina, David, Northfield Center, OH Ohio 44067 (US); Heilman, Jeremiah, Middleton, WI Wisconsin 53562 (US)
(74) Representative: Dennemeyer & Associates S.A.

(57) **Abstract**

An LED lamp has dual modes of operation from fluorescent lamp fixtures. A first circuit powers at least one LED in a first mode of operation when first and second power connector pins at a first end of the lamp are inserted into power receptacles of the fixture that are directly connected to power mains. A second circuit powers at least one LED in a second mode of operation when the second power connector pin at the first end of the lamp and a third power connector pin at a second end of the lamp are inserted into power receptacles of a fixture powered from an electronic ballast. First and second conduction control means permit the second circuit to power at least one LED during the second mode of operation.

## Description

### Field of the Invention

The present invention relates to an LED lamp with dual mode operation from a fluorescent lamp fixture wired to supply either mains power or power from an electronic ballast associated with the fixture.

### Background of the Invention

One conventional, elongated LED lamp can be retrofit into an existing fluorescent lamp fixture whose wiring is reconfigured so as to directly supply mains power to the LED lamp. With such an LED "retrofit" lamp, power is typically supplied to the lamp from a pair of power connector pins on one end of the lamp, with the pair of connector pins at the other end of the lamp not powering the lamp but providing mechanical support for the lamp. The foregoing arrangement for powering the lamp from the power connector pins at one end of the lamp has the benefit of limiting exposure to potentially life-threatening electrical shock from the mains current to a lamp installer during lamp installation.

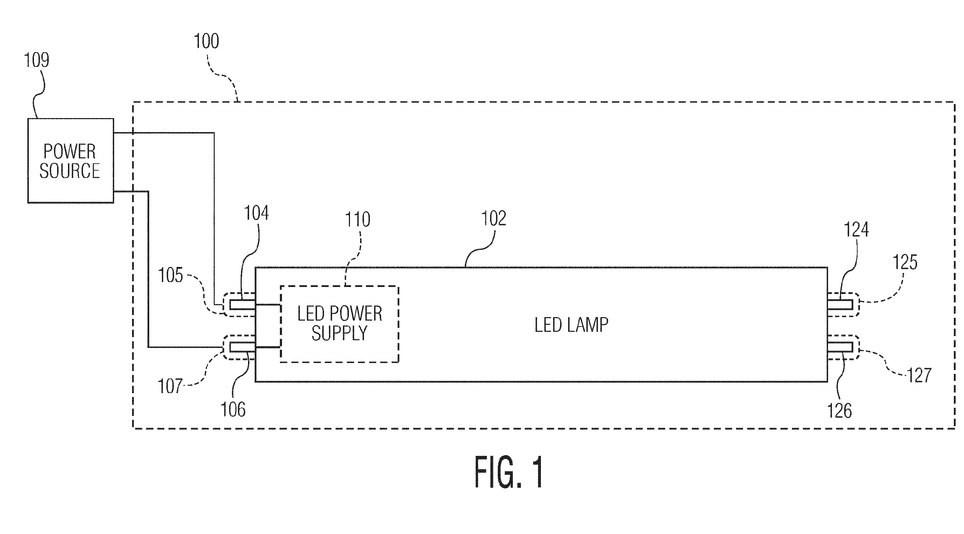

A second conventional, elongated LED lamp can be retrofit into an existing fluorescent lamp fixture so as to use a fluorescent lamp electronic ballast contained in the fixture without reconfiguring the fixture wiring. As is the case with fluorescent lamps, the LED retrofit lamp obtains power from power connector pins at opposite ends of the lamp. A representative LED retrofit lamp of this type is disclosed in Patent No. US 8,089,213 B2 to Park. The Park LED lamp has a single mode of operation from an existing fluorescent lamp ballast associated with a fluorescent lamp fixture. Park teaches the use of capacitors C11-C14 in his FIG. 1 to "control the capacitance of a series resonant circuit of a fluorescent lamp ballast" at Col. 4, II. 26-30. Inasmuch as Park teaches fluorescent lamp ballasts having a high frequency of 50 KHz (Col. 8, I. 58 & Col. 11, I. 4), capacitors C11-C14, of necessity, have a high impedance at typical mains frequencies of 50 or 60 Hz. Accordingly, capacitors C11-C14 provide the benefit of sufficiently attenuating any current at typical mains frequencies so as to prevent a potentially life-threatening electrical shock hazard if the LED retrofit lamp is accidentally placed into a fluorescent lamp ballast wired directly to power mains.

Lamp designers have recognized that it would be desirable to have an LED retrofit lamp with dual mode operation from either an existing fluorescent lamp ballast associated with a fluorescent lamp fixture, or directly from power mains. U.S. Patent No. US 8,575,856 B2 to Chung et al. provides an LED lamp with dual mode operation. However, a single circuit is used to power LEDs in the lamp whether the power is supplied by AC mains or whether the power is supplied by an existing fluorescent lamp electronic ballast. This attempt suffers in potential performance regarding energy efficiency and stability compared to an LED lamp that operates only from AC mains power, or an LED lamp that operates only from power supplied by a fluorescent lamp electronic ballast.

The Chung et al. LED lamp is also flawed in that it fails to mitigate a potentially life-threatening electrical shock hazard when a lamp is placed into a fixture that is wired directly to power mains. This is because, in the case of AC mains operation, power is applied across the LED lamp through the same circuit used when the fluorescent lamp electronic ballast is present. As a result, a potential shock hazard is created, which may be life-threatening to a lamp installer during lamp installation.

It would, therefore, be desirable to provide an LED retrofit lamp with dual mode operation from an existing fluorescent lamp electronic ballast associated with a fluorescent lamp fixture, as well as, alternatively, directly from power mains that is efficient and stable. It would also be desirable to provide such as lamp that can avoid a potential life-threatening electrical shock hazard when such a lamp is placed into a fixture wired to supply power directly from power mains.

### Summary of the Invention

The present invention combines dual modes of operation of an LED retrofit lamp. In a first mode, the LED retrofit lamp receives power from power mains in a fluorescent lamp fixture; in an alternative, second mode, the LED retrofit lamp receives power from a fluorescent lamp electronic ballast in a fluorescent lamp fixture. In the first mode, the LED lamp can be wired to receive power from a pair of power connector pins at one end of the lamp. In the second mode, the LED lamp receives power from a fluorescent lamp electronic ballast associated with the lamp fixture. The foregoing dual mode operation is accomplished through the use of first and second circuits respectively dedicated to the first and second modes of operation. While the first and second circuits share one common power connector pin on the LED lamp and typically power the same LEDs, the first and second circuits may be electrically isolated from each other via novel conduction control arrangements.

In one form, the present invention provides an LED lamp with dual mode operation from a fluorescent lamp fixture wired to supply either mains power or power from an electronic ballast supplying AC power at a ballast frequency. The LED lamp comprises an elongated housing having first and second ends. A first end of the elongated housing is provided with first and second power connector pins. A second end of the elongated housing is provided with a third power connector pin. A first circuit is intended to provide primary power to at least one LED that is for being powered in a first mode and that provides light along a length of the elongated housing. The first mode occurs when the LED lamp is inserted into a fluorescent lamp fixture having electrical receptacles that receive the first and second power connector pins and that are directly connected to power mains supplying power at a mains frequency much lower than the ballast frequency. The first circuit limits current to the at least one LED for being powered in a first mode. A second circuit is intended to provide primary power to at least one LED that is for being powered in a second mode and that provides light along a length of the elongated housing. The second mode occurs when the LED lamp is inserted into a fluorescent lamp fixture having electrical receptacles that receive the second and third power connector pins, at opposite lamp ends, and that are connected to the electronic ballast for receiving power therefrom. The second circuit includes a rectifier circuit that receives power from the second and third power connector pins. A first conduction control means is serially connected between the second power connector pin and the rectifier circuit for permitting the second circuit to power the at least one LED for being powered in the second mode when the second and third power connector pins, at opposite lamp ends, are connected to the electronic ballast. A second conduction control means is serially connected between the third power connector pin and the rectifier circuit for permitting the second circuit to power the at least one LED for being powered in the second mode when the second and third power connector pins, at opposite lamp ends, are connected to the electronic ballast.

In some embodiments, the at least one LED for being powered in a first mode and the at least one LED for being powered in a second mode have at least one LED in common. In other embodiments, the at least one LED for being powered in a first mode and the at least one LED for being powered in a second mode do not have any LEDS in common.

The foregoing LED lamp can be retrofit into an existing fluorescent lamp fixture and has dual mode operation from an existing fluorescent lamp electronic ballast associated with the lamp fixture, as well as, alternatively, directly from power mains. Beneficially, the LED lamp can be configured to mitigate a potentially life-threatening electrical shock hazard when such a lamp is placed into a fixture wired to supply power directly from power mains. Some embodiments of the inventive lamp are configured to provide additional protection against shock exposure to a lamp installer.

Further, the foregoing LED lamp is more efficient to operate than using, as various prior art references teach, a master circuit that senses whether a lamp fixture supplies power from an electronic ballast or directly from power mains, and that provides appropriate power to LEDs. Rather than using such a master circuit, as the foregoing summary of the invention teaches, the present invention uses first and second circuits to receive mains power or power from an existing fluorescent lamp ballast, respectively. This approach eliminates the energy loss that results when using an active LED driver to reprocess power from an existing fluorescent lamp ballast. This approach also typically allows the second circuit to be formed inexpensively from a few passive components, such as a diode rectifier circuit and one or more capacitors.

### Brief Description of the Drawings

Further features and advantages of the invention will become apparent from reading the following detailed description in conjunction with the following drawings, in which like reference numbers refer to like parts:
FIG. 1 is an electrical schematic diagram, partially in block form, of a fluorescent lamp fixture that is wired to provide mains power directly to power connector pins of an LED lamp in accordance with the invention.
FIG. 2 is similar to FIG. 1, but provides mains power to all four power receptacles of the fluorescent lamp fixture.
FIGS. 3 and 4 are electrical schematic diagrams, partially in block form, of a fluorescent lamp fixture including a fluorescent lamp electronic ballast and an LED lamp in accordance with the invention.
FIG. 5 is an electrical schematic diagram of circuitry within the LED lamp shown in FIGS. 1-3.
FIG. 6 is an electrical schematic diagram of an LED power supply including a high frequency isolating transformer between electrical inputs and electrical outputs.
FIG. 7 is an electrical schematic diagram of an LED power supply that does not include means for isolating electrical outputs from electrical inputs.
FIG. 8, 9 and 10 are electrical schematic diagrams of circuities within the LED lamp shown in FIGS. 1-3 that are alternative to that shown in FIG. 5.
FIG. 11 shows various electrical schematic diagrams of alternative embodiments of the conduction control means shown in FIGS. 5 and in FIGS. 8-10 in tabular form and provides other qualifications for those embodiments.

### Detailed Description

The examples and drawings provided in the detailed description are merely examples, and should not be used to limit the scope of the claims in any claim construction or interpretation.

### Definitions

In this specification and appended claims, the following definitions apply:

An "active component" connotes a controllable electrical component that supplies controllable energy in the form of voltage or current to a circuit containing the active component. Examples of active components are transistors.

An "active circuit" connotes a circuit using a control loop that incorporates feedback and an active element for the purpose of limiting current to a load.

A "passive component" connotes an electrical component that is incapable of supplying externally controllable energy in the form of voltage or current into a circuit containing the passive component. Examples of passive components are rectification diodes, LED diodes, resistors, capacitors, inductors, or magnetic ballasts operating at 50 or 60 Hz.

A "passive circuit" connotes a circuit that does not include an active component as defined herein.

An "electronic ballast for a fluorescent lamp" or the like connotes an instant start ballast, a rapid start ballast, a programmed start ballast, and other ballasts that use switch-mode power supplies to realize current-limiting for fluorescent lamps. An "electronic ballast for a fluorescent lamp ballast" does not include a so-called magnetic ballast.

"Power mains" connote the conductors through which AC or DC electrical power is supplied to end users. AC power is typically supplied at a frequency between about 50 and 60 Hz, and typically between about 100 and 347 volt rms. Specialized power mains provide power at 400 Hz. A frequency of zero for power mains corresponds herein to DC power.

Other definitions are provided in the following description for "conduction control means" and "permit," by way of example.

### Fluorescent Lamp Fixtures

FIG. 1 shows an exemplary fluorescent lamp fixture 100 for an elongated LED lamp 102. Fluorescent lamp fixture 100 is wired to supply mains power from a power source 108 to first and second power connector pins 104 and 106 via respective power receptacles 105 and 107. Power receptacles 125 and 127, which are not wired to receive mains power, receive third and fourth power connector pins 124 and 126, respectively, so as to mechanically support the power connector pins. An LED power supply 110 conditions the power supplied by power source 109 for driving LEDs (not shown) in LED lamp 102, such as by limiting current to the LEDs.

Power source 109 may be an AC source with a typical power mains frequency of 50 or 60 Hz or 400 Hz. Power source 109 may also be a DC power source, in which case the mains frequency is considered zero.

Referring again to FIG. 1, the claimed invention contemplates first and second power connector pins on one end of LED lamp 102 and a third power connector pin 124 at the other end of the lamp. It is not important that first power connector pin 106 be axially displaced from third power connector pin 124 as shown in FIG. 1; they could also be axially aligned with each other.

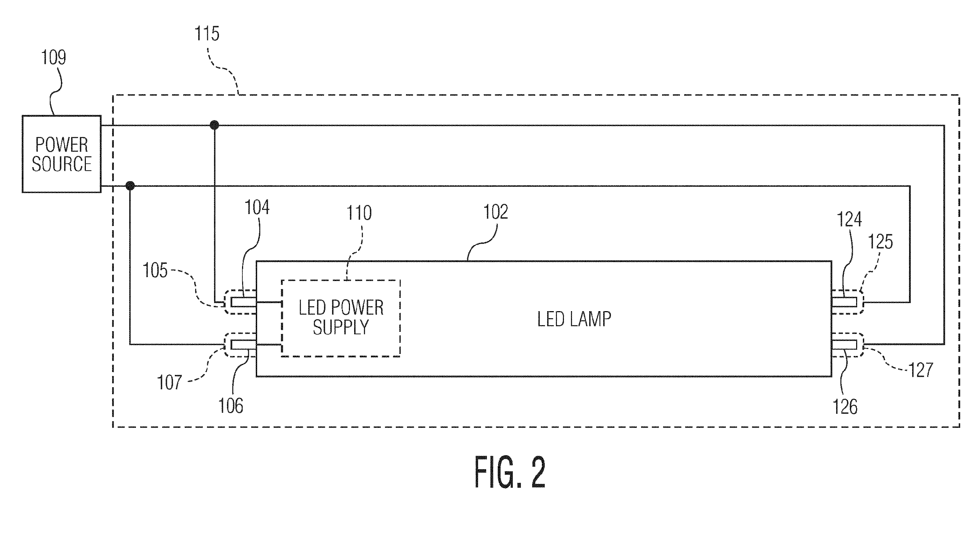

FIG. 2 is similar to FIG. 1, but shows an exemplary fluorescent lamp fixture 115 that provides mains power from power source 109 to all four power connector pins 104, 106, 124 and 126 of LED lamp 102. Mains power is supplied to third and fourth power connector pins 124 and 126 via power receptacles 125 and 127, respectively, of fluorescent lamp fixture 115. LED power supply 110 conditions the power supplied by power source 109 for driving LEDs (not shown) in LED lamp 102, such as by limiting current to the LEDs. In contrast to fluorescent lamp fixture 100 of FIG. 1, if LED lamp 102 is inserted into fluorescent lamp fixture 115 in the reverse direction, mains power would be supplied to LED power supply 110 via power receptacles 125 and 127.

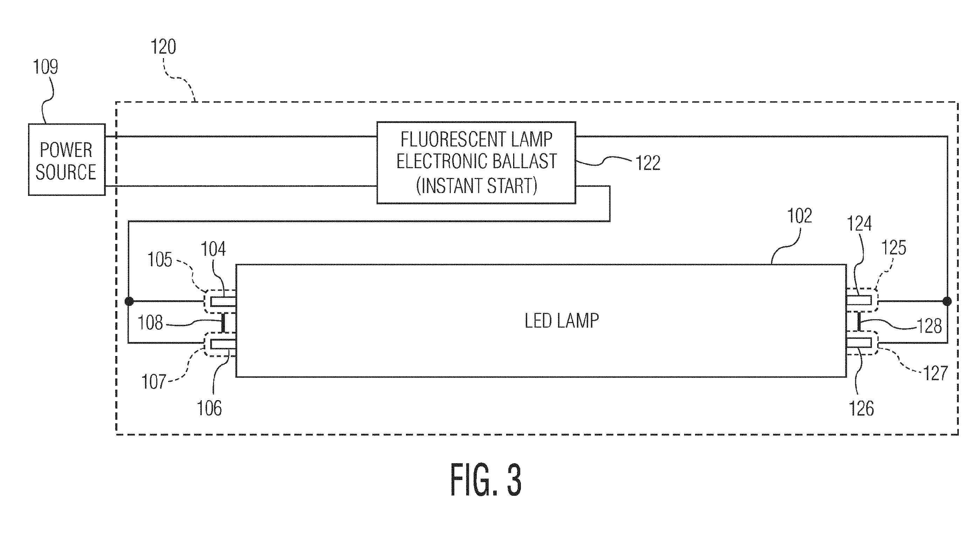

FIG. 3 shows an exemplary fluorescent lamp fixture 120, including a fluorescent lamp electronic ballast 122, which supplies power to the same LED lamp 102 as shown in FIG. 1 or 2, but through different power connector pins from the fluorescent lamp fixtures 100 and 115 of FIGS. 1 and 2. In FIG. 3, electrical power from fluorescent lamp electronic ballast 122 is supplied to LED lamp 102 through second power connector pin 106, via electrical receptacle 107, and through third power connector pin 124, via electrical receptacle 127. Second and third power connector pins 106 and 126 are on opposite ends of the lamp. For convenience when using a fluorescent lamp electronic ballast 122 of the instant start type, electrical receptacles 105 and 107 may optionally be shorted together by an electrical short 108, and electrical receptacles 125 and 127 may be shorted together by an electrical short 128. Fourth power connector pin 126 need not be connected to circuitry within the lamp, as indicated in the figure.

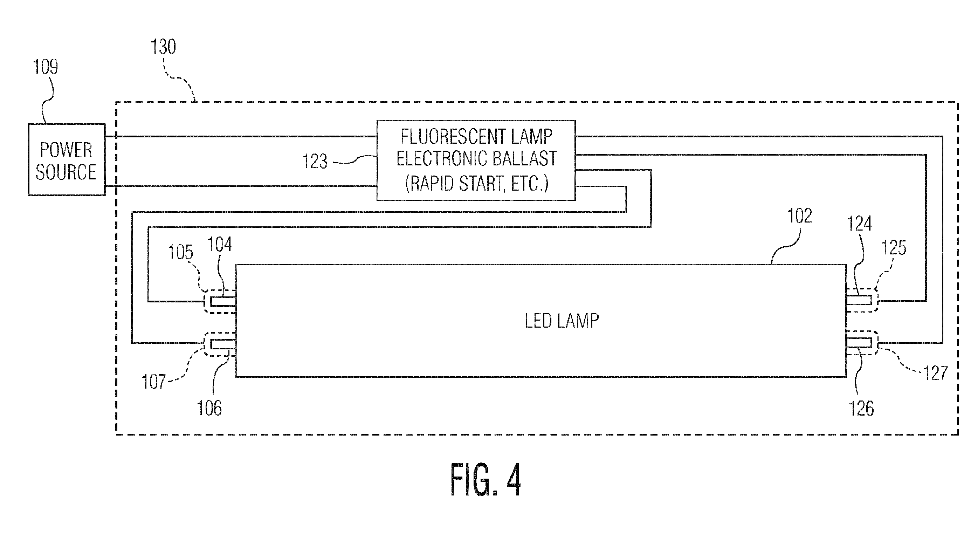

FIG. 4 shows an exemplary fluorescent lamp fixture 130, including a fluorescent lamp electronic ballast 122. As in FIG. 3, fluorescent lamp fixture 130 supplies power to the same LED lamp 102 as shown in FIG. 1 or 2, but through different power connector pins from the fluorescent lamp fixtures 100 and 115 of FIGS. 1 and 2. The main difference between fluorescent lamp fixtures 120 (FIG. 3) and 130 (FIG.4) is that fluorescent lamp fixture 130 provides separate conductors for each of power connector pins 104, 106, 124 and 126. The use of separate conductors is typical in regard to fluorescent lamp fixtures 130 of the rapid start or programmed start, for instance.

It should be noted that the same LED lamp 102 is described with a mode of operating when directly wired to power mains in FIG. 1 or 2 and with a second mode of operating from a fluorescent lamp electronic ballast 122 as shown in FIG. 3 or 4.

### Circuitry within LED Lamp

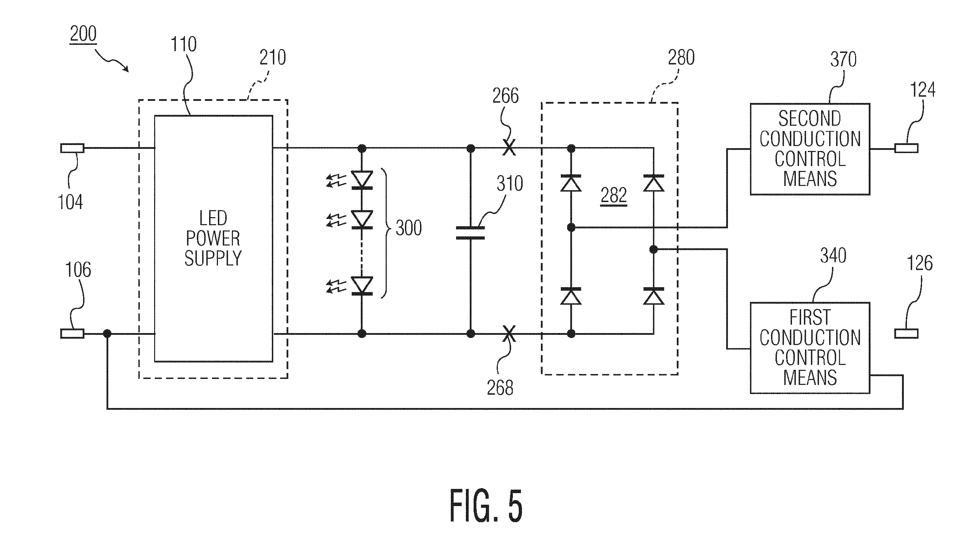

FIG. 5 shows circuitry 200 within LED lamp 102 of above-described FIGS. 1-3. Circuitry 200 includes a first circuit 210 and a second circuit 280, either of which can power LEDs 300 depending upon whether (a) fluorescent lamp fixture 100 or 115 (FIG. 1 or 2) or (b) fluorescent lamp fixture 120 (FIG. 3) or 130 (FIG. 4) is to be used. LEDs 300 are shown as a single string of series-connected LEDs. Serially connected string of LEDs 300 can be replaced with routine skill in the art by one or more (a) parallel connected strings of LEDs, or (b) one or more parallel and serially connected strings of LEDs, or (c) a combination of the foregoing topologies (a) and (b). Capacitor 310 can be omitted if alternative energy storage for powering LEDs 300 is provided. By way of example, such alternate energy storage could be an electrolytic capacitor in fluorescent lamp electronic ballast 122 (FIG. 3) or 123 (FIG. 4) and another electrolytic capacitor in LED power supply 110 (FIG.5).

Circuitry 200 includes first conduction control means 340 and second conduction control means 370, whose functions include permitting independent operation of the first and second circuits 210 and 280. Capacitor 310 may be shared by both first and second circuits 210 and 280. First conduction control means 340 and second conduction control means 370 may also be used to mitigate potentially life-threatening electrical shocks when an LED lamp is inserted into a fluorescent lamp fixture that has a power connector receptacle (not shown) supplying mains power to a power connector pin of the lamp.

When using fluorescent lamp fixture 100 or 115 of FIGS. 1 and 2, respectively, in which power source 109 supplies power over power mains directly to first and second power connector pins 104 and 106, first circuit 210 conditions the power for driving LEDs 300. First circuit 210 includes LED power supply 110 shown in FIGS. 1 and 2. Both non-isolated and electrically isolated power supplies are contemplated for LED power supply 110.

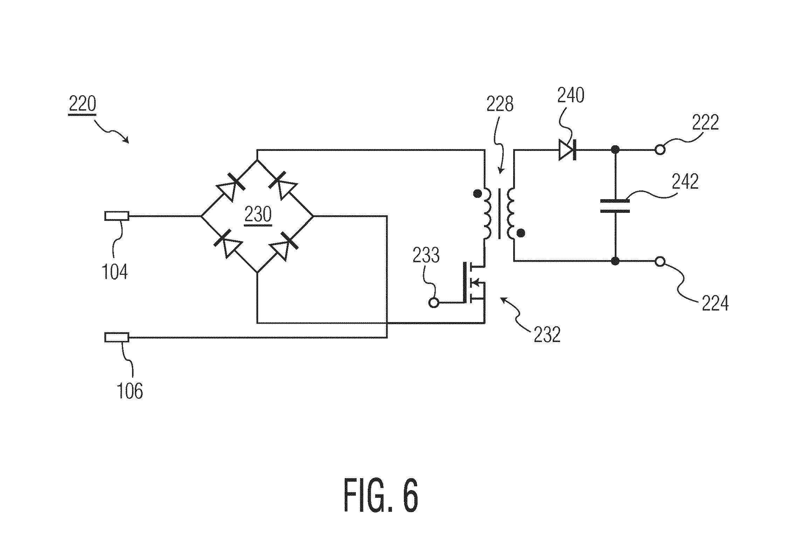

FIG. 6 shows a typical isolated power supply 220 for LED lamp 102 (FIGS. 1-4), which receives mains power on first and second power connector pins 104 and 106, and supplies conditioned power on outputs 222 and 224 to LEDs 300 of FIG. 5. Power supply 220, known as an offline, isolated flyback LED driver circuit, includes an isolation transformer 228. By "isolation" is meant sufficiently limiting conduction through the transformer at the power mains frequency to less than 10 milliamps. The foregoing constraint qualifies the type of isolation transformer to which reference is made herein. The foregoing Power supply 220 includes a conventional full-wave rectifier circuit 230, a field effect transistor (FET) 232, an output flyback diode 240 and capacitor 242. FET 232 is controlled in a known manner by a signal applied to its gate 233.

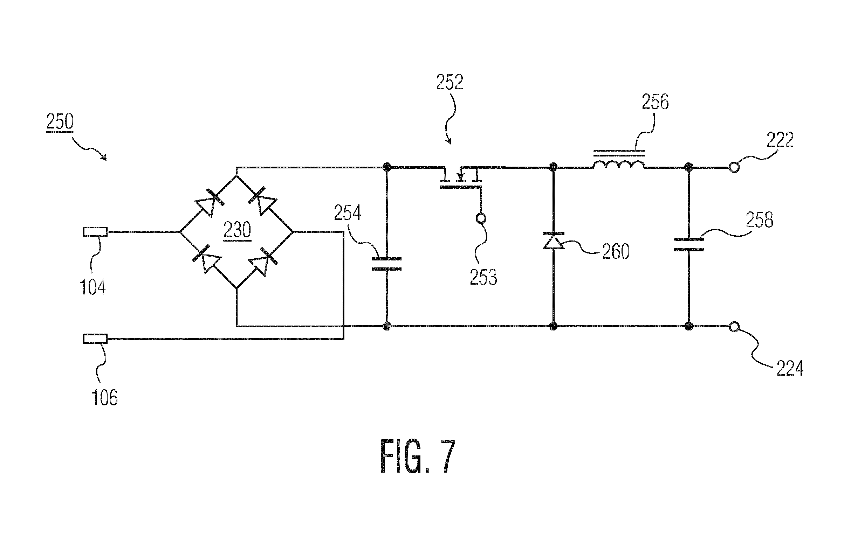

FIG. 7 shows a typical non-isolated power supply 250 for LED lamp 102 (FIGS. 1-4) that receives power from power mains via first and second power connector pins 104 and 106, and supplies conditioned power on outputs 222 and 224 to LEDs 300 of FIG. 5. Power supply 250, known as a basic offline buck LED driver circuit, includes a field effect transistor (FET) 252, and cooperating capacitor 254, inductor 256, and capacitor 258. Diode 260 is a high speed recovery diode. FET 252 is controlled by a signal provided to its gate 253 in a known manner.

The foregoing LED power supply circuits 220 and 250 of FIGS. 6 and 7 are shown in basic form, and are representative of isolating and non-isolating LED power supplies. Many other suitable configurations for isolating and non-isolating LED power supplies will be apparent to persons of ordinary skill in the art. Examples of other suitable isolated power supplies that can be used are a basic flyback circuit, a boost plus flyback circuit, a buck-boost circuit with added isolation, or a forward converter. Examples of other suitable non-isolating power supplies that can be used are buck-boost circuit, a boost circuit, a Cuk circuit, or a single-ended primary inductor converter (SEPIC) circuit.

As shown in FIGS. 6 and 7, both isolating and non-isolating LED power supplies 220 and 250 typically include an active electrical component of a field effect transistor 232 or 252, for instance. As such, LED power supplies 220 and 250 may comprise active circuits, as defined above.

Returning to circuitry 200 of FIG. 5, second circuit 280 may typically be a simple, passive circuit as defined above. In the embodiment shown, second circuit 280 mainly comprises a rectifier circuit 282 formed from a full-wave diode bridge, for instance. Rectifier circuit 282 can be formed with many other topologies, such as a half-wave bridge or a voltage doubler.

Various benefits result from using first and second circuits 210 and 280 (FIG. 5) that are respectively dedicated to direct mains power operation and operation from an existing fluorescent lamp ballast associated with a lamp fixture. In addition to the benefits of energy efficiency and economy mentioned in the Summary of the Invention above, a lamp installer has more options when installing an LED lamp. For instance, in a school building, an installer can decide to rewire fluorescent lamp ballasts in a classroom for use directly from the power mains, to increase efficiency of converting electricity to light. In other locations in the same building, the installer may decide that it would be more economical overall to operate the lamps from existing fluorescent lamp ballasts, for example, in a closet or for emergency lighting in a stairwell. This is because the light fixtures in such locations may be used only occasionally, and it would be more costly to rewire the light fixtures in those locations than to use existing fluorescent lamp electronic ballasts. Additionally, if a fluorescent lamp ballast fails in operation, the fixture containing such ballast can be rewired to operate the same lamp directly from power mains.

Further, it is preferable that the first and second circuits 210 and 280 (FIG. 5) are respectively active and passive circuits, as those terms are defined herein, so as to allow higher efficiency, as mentioned, and a broader range of stable operation. In particular, each circuit can be optimized to work most efficiently with its respective power source.

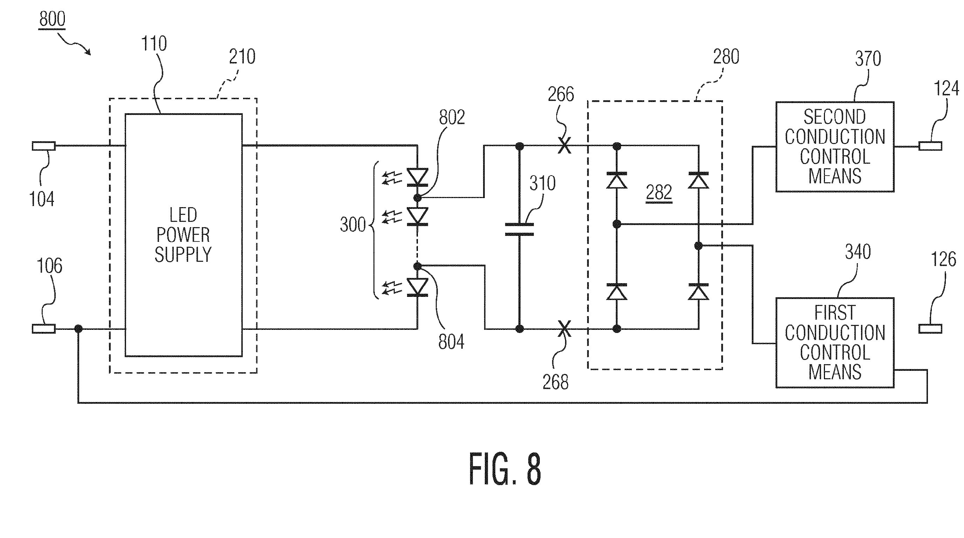

FIG. 8 shows an alternative circuitry 800 within LED lamp 102 of above-described FIGS. 1-4. Circuitry 800 shares components with circuitry 200 of FIG. 5 that have the same reference numerals. The main difference is that second circuit 280 is used to power only a portion of LEDs that are accessed via nodes 802 and 804. Node 802 can be at other locations, such as at the top of LEDs 300. Similarly, node 804 can be at other locations, such as at the bottom of LEDs 300. In the implementation of first circuit 210 using isolated power supply 220 of FIG. 6 or the non-isolated power supply 250 of FIG. 7, the value of capacitor 242 (FIG. 6) or capacitor 258 (FIG. 7) should be chosen as follows. The value of the foregoing capacitors 242 or 258 should be chosen in association with the value of capacitor 310 of FIG.8 to provide sufficient energy storage at the LED operating frequency to result in acceptably low light flicker levels.

By having second circuit 280 power only a portion of the LEDs 300 powered by first circuit 210, the circuit designer has a greater degree of design choice to optimize one or both first and second circuits 210 and 280.

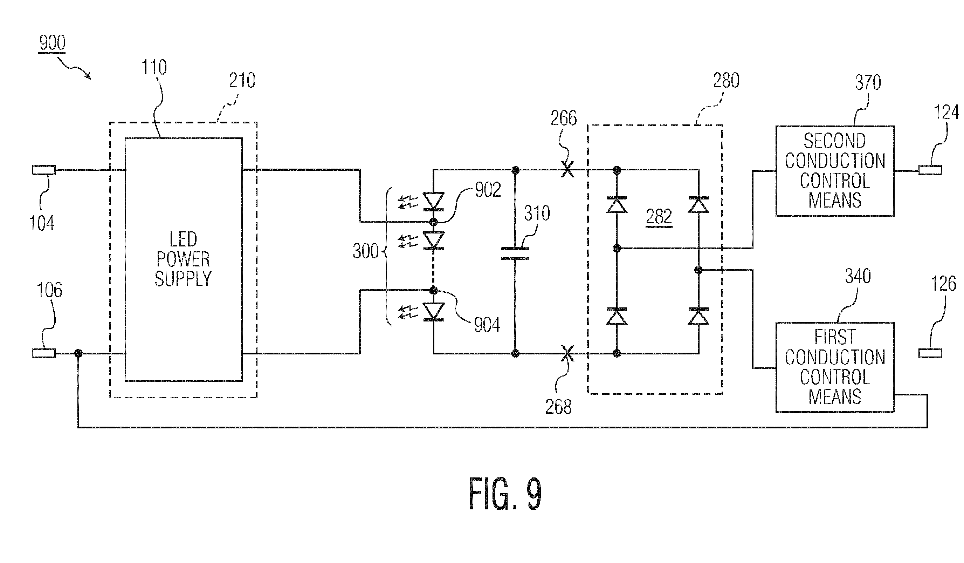

FIG. 9 shows a further alternative circuitry 900 within LED lamp 102 of above-described FIGS. 1-4. Circuitry 900 shares components with circuitry 200 of FIG. 5 that have the same reference numerals. The main difference is that first circuit 210 is used to power only a portion of LEDs that are accessed via nodes 902 and 904. Node 902 can be at other locations, such as at the top of LEDs 300. Similarly, node 904 can be at other locations, such as at the bottom of LEDs 300. In the implementation of first circuit 210 using isolated power supply 220 of FIG. 6 or the non-isolated power supply 250 of FIG. 7, the value of capacitor 242 (FIG. 6) or capacitor 258 (FIG. 7) should be chosen as follows. The value of the foregoing capacitors 242 or 258 should be chosen in association with the value of capacitor 310 of FIG. 9 to provide sufficient energy storage at the LED operating frequency to result in acceptably low light flicker levels.

By having first circuit 210 power only a portion of the LEDs 300 powered by second circuit 280, the circuit designer has a greater degree of design choice to optimize one or both first and second circuits 210 and 280.

As with first circuit 210 of FIG. 5, first circuit 210 of FIGS. 7 and 8 can be realized as either isolated power supply 220 of FIG. 6 or non-isolated power supply 250 of FIG. 7, by way of example.

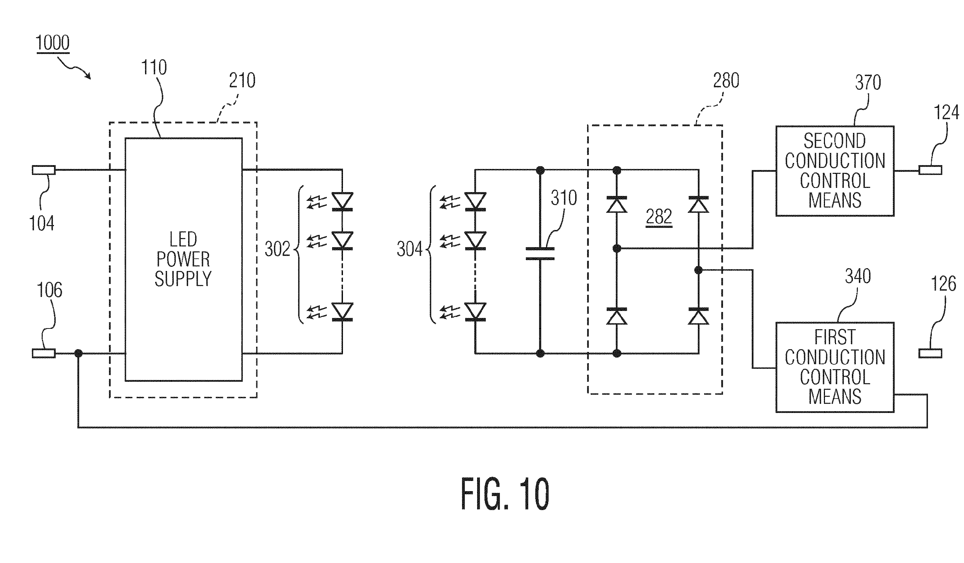

FIG. 10 shows still further alternative circuitry 1000 within LED lamp 102 of above-described FIGS. 1-4. Circuitry 1000 shares components with circuitry 200 of FIGS. 5, 8 and 9 that have the same reference numerals. The main difference is that, rather than having LEDs 300 powered by both first and second circuits 210 and 280, first circuit 210 exclusively powers LEDs 302 and second circuit 280 exclusively powers LEDs 304. The variations of LEDs 300 described above apply as well to LEDs 302 and 304. This entirely eliminates the above-mentioned concern mains power passing through second circuit 280 and interfering with the intended operation of first circuit 210 when the first circuit is connected to mains power via first and second power connector pins 104 and 106.

### Possible First Conduction Control Means Functions

Referring to FIGS. 5 and 8-10 first conduction control means 340 preferably performs one or more of the following functions:

(1) PERMIT SECOND CIRCUIT OPERATION. First conduction control means 340 may be realized as a capacitor, for instance, for conducting power at the frequency of fluorescent lamp electronic ballast 122 or 123 shown in FIGS. 3 and 4 (hereinafter, "ballast frequency"), typically about 45 kHz. By "permit" second circuit operation is meant herein to provide necessary, but not sufficient, means to allow second circuit 280 to operate. In addition, the second conduction control means 370 also needs to permit second circuit operation. In other words, both first and second conduction control means 340 and 370 are necessary, and together, sufficient to enable operation of second circuit 280.

(2) PERMIT SECOND CIRCUIT TO OPERATE WITHOUT INTERFERING WITH FIRST CIRCUIT. First conduction control means 340 also may perform the function of permitting second circuit 280 to operate without interfering with first circuit 210 during intended operation of first circuit 210; that is, when the first circuit is connected to mains power via first and second power connector pins 104 and 106. To realize this function, conduction control means 340 is configured as a capacitor or a switch situated in the open position, for instance, to limit conduction of current when first circuit 210 is operating, from the mains to LEDs 300 via second power connector pin 106 and rectifier circuit 282 of second circuit 280. Such limitation of current from the mains prevents first or second substantial levels of deviation of light from LEDs 300 compared to the average luminous intensity of such LEDs that would arise from first circuit 210 being standalone. First circuit 210 would be standalone if imaginary cuts 266 and 268 were made to the circuitry of FIGS. 5, 8 and 9. The following two types of deviation of light are contemplated:
(1) Flicker-type deviation of light from LEDs 300 in the frequency range of 0.1 Hz to 200 Hz; and
(2) Continuous-type deviation of light from LEDs 300.

A first substantial level of deviation of light of the flicker-type and the continuous-type is 10 percent. A second substantial level of deviation of light of the flicker-type and continuous-type is 5 percent for minimizing annoying flicker-type and continuous-type deviation. Measurement of luminous intensity for purposes of calculating light flicker is well known, and may utilize a photocell to constantly measure light from a light source.

(3) LIMIT CURRENT FOR DRIVING LEDs. First conduction control means 340 may further limit current as appropriate for driving LEDs 300. First conduction control means 340 can accomplish this function when realized as a capacitor, which presents much larger impedance at mains power frequency than at the frequency of fluorescent lamp electronic ballast 122. The mains power frequency is much lower than the ballast frequency, which follows from the fact that the mains frequency is in the range from zero to 500 Hz whereas the ballast frequency is from 10 kHz and up.

(4) PERMIT ATTAINMENT OF SHOCK HAZARD PROTECTION. A fourth possible function of first conduction control means 340 is to permit the mitigation of a potentially life-threatening electrical shock hazard when such a lamp 102 (FIGS. 1-4) is inserted into a fluorescent lamp fixture (e.g., 100, 115, 120 or 130 of FIGS. 1-4) by an installer. First conduction control means 340 can be embodied as a capacitor or a switch situated in the open position that is configured, for each exposed power connector pin, to prevent current conduction at the mains frequency in an amount exceeding a current threshold level when measured through a non-inductive 500 ohm resistor connected directly between the foregoing each exposed power connector pin and earth ground, for each of the following situations involving first and second ones of a pair of power connector pins on an opposite end of the lamp that are associated with first and second power receptacles that receive mains power from said fixture: (1) a first one of the pair of power connector pins is inserted into the first power receptacle and no power connector pin is inserted into the second power receptacle; (2) the first one of the pair of power connector pins is inserted into the second power receptacle and no power connector pin is inserted into the first power receptacle; (3) a second one of the pair of power connector pins is inserted into the first power receptacle and no power connector pin is inserted into the second power receptacle; (4) the second one of the pair of power connector pins is inserted into the second power receptacle and no power connector pin is inserted into the first power receptacle; (5) the first one of the pair of power connector pins is inserted into the first power receptacle and the second one of the pair of power connector pins is inserted into the second power receptacle; and (6) the second one of the pair of power connector pins is inserted into the first power receptacle and the first one of the pair of power connector pins is inserted into the second power receptacle. The current threshold level can be 10 milliamps rms, for instance, or preferably even a lower value, such as 5 milliamps rms. When a capacitor is used to realize first conduction control means 340, the value of the capacitor can be chosen to select a desired current threshold level. The foregoing feature of first conduction control means 340 for limiting conduction of current is closely related to the Underwriter Laboratory test procedure in the United States for mitigating the above-mentioned potentially life-threatening electrical shock hazard to an installer of an LED lamp.

### Possible Second Conduction Control Means Functions

Referring to FIGS. 5 and 8-10), second conduction control means 370 preferably performs one or more of the following functions:

(1) PERMIT SECOND CIRCUIT OPERATION. Second conduction control means 370 may be realized as a capacitor, for instance, for conducting power at the frequency of fluorescent lamp electronic ballast 122 or 123 shown in FIGS. 3 and 4 (hereinafter, "ballast frequency"), typically about 45 kHz. The word "permit" is defined above in regard to first conduction control means function (1).

(2) PERMIT SECOND CIRCUIT TO OPERATE WITHOUT INTERFERING WITH FIRST CIRCUIT. Second conduction control means 370 also may perform the function of permitting second circuit 280 to operate without interfering with first circuit 210 during intended operation of first circuit 210; that is, when the first circuit is connected to mains power via first and second power connector pins 104 and 106. To realize this function, conduction control means 370 is configured as a capacitor or a switch situated in the open position, for instance, to limit conduction of current when first circuit 210 is operating, from the mains to LEDs 300 via third power connector pin 124 and rectifier circuit 282 of second circuit 280. Mains power is supplied to third power connector pin 124 when using fluorescent lamp fixture 115 of FIG. 2, for instance. Such limitation of current from the mains prevents first or second substantial levels of deviation of light from LEDs 300 compared to the average luminous intensity of such LEDs that would arise from first circuit 210 being standalone. First circuit 210 would be standalone if imaginary cuts 266 and 268 were made to the circuitry of FIGS. 5, 8 and 9. The following two types of deviation of light are contemplated:
(3) Flicker-type deviation of light from LEDs 300 in the frequency range of 0.1 Hz to 200 Hz; and
(4) Continuous-type deviation of light from LEDs 300.

A first substantial level of deviation of light of the flicker-type and the continuous-type is 10 percent. A second substantial level of deviation of light of the flicker-type and continuous-type is 5 percent for minimizing annoying flicker-type and continuous-type deviation. Measurement of luminous intensity for purposes of calculating light flicker is well known, and may utilize a photocell to constantly measure light from a light source.

(3) LIMIT CURRENT FOR DRIVING LEDs. Second conduction control means 370 may further limit current as appropriate for driving LEDs 300. Second conduction control means 370 can accomplish this function when realized as a capacitor, which presents much larger impedance at mains power frequency than at the frequency of fluorescent lamp electronic ballast 122. The mains power frequency is much lower than the ballast frequency, which follows from the fact that the mains frequency is in the range from zero to 500 Hz whereas the ballast frequency is from 10 kHz and up.

(4) PERMIT ATTAINMENT OF SHOCK HAZARD PROTECTION. Another possible function of second conduction control means 370 is to permit the mitigation of a potentially life-threatening electrical shock hazard when such a lamp 102 (FIGS. 1-4) is inserted into a fluorescent lamp fixture (e.g., 100, 115, 120 or 130 of FIGS. 1-4) by an installer. Second conduction control means 370 can be embodied as a capacitor or a switch situated in the open position that is configured, for each exposed power connector pin, to prevent current conduction at the mains frequency in an amount exceeding a current threshold level when measured through a non-inductive 500 ohm resistor connected directly between the foregoing each exposed power connector pin and earth ground, for each of the following situations involving first and second ones of a pair of power connector pins on an opposite end of the lamp that are associated with first and second power receptacles that receive mains power from said fixture: (1) a first one of the pair of power connector pins is inserted into the first power receptacle and no power connector pin is inserted into the second power receptacle; (2) the first one of the pair of power connector pins is inserted into the second power receptacle and no power connector pin is inserted into the first power receptacle; (3) a second one of the pair of power connector pins is inserted into the first power receptacle and no power connector pin is inserted into the second power receptacle; (4) the second one of the pair of power connector pins is inserted into the second power receptacle and no power connector pin is inserted into the first power receptacle; (5) the first one of the pair of power connector pins is inserted into the first power receptacle and the second one of the pair of power connector pins is inserted into the second power receptacle; and (6) the second one of the pair of power connector pins is inserted into the first power receptacle and the first one of the pair of power connector pins is inserted into the second power receptacle. The current threshold level can be 10 milliamps rms, for instance, or preferably even a lower value, such as 5 milliamps rms. When a capacitor is used to realize first conduction control means 340, the value of the capacitor can be chosen to select a desired current threshold level. The foregoing qualification on second conduction control means 370 for limiting conduction of current is closely related to the Underwriter Laboratory test procedure in the United States for mitigating the above-mentioned potentially life-threatening electrical shock hazard to an installer of an LED lamp.

### Providing Shock Hazard Protection - other Techniques

The foregoing possible functions of permitting shock hazard protection for the first and second conduction control means 340 and 370 in FIGS. 5, 8-9 and 10 can be realized in other ways. For instance, one can use an isolated power supply, e.g., 220 (FIG. 6) rather than a non-isolating power supply, e.g., 250 (FIG. 6) in lieu of is instead of realizing second conduction control means 370 as a capacitor or switch. It is also possible to aggregate multiple means of preventing mains power from reaching any "exposed power connector pin" without departing from the teaching of the present invention. "Exposed power connector pin" has the same meaning as discussed above in the Shock Hazard Protection functions for the first and second conduction control means 340 and 370.

### Tabular listing of Embodiments 1-13

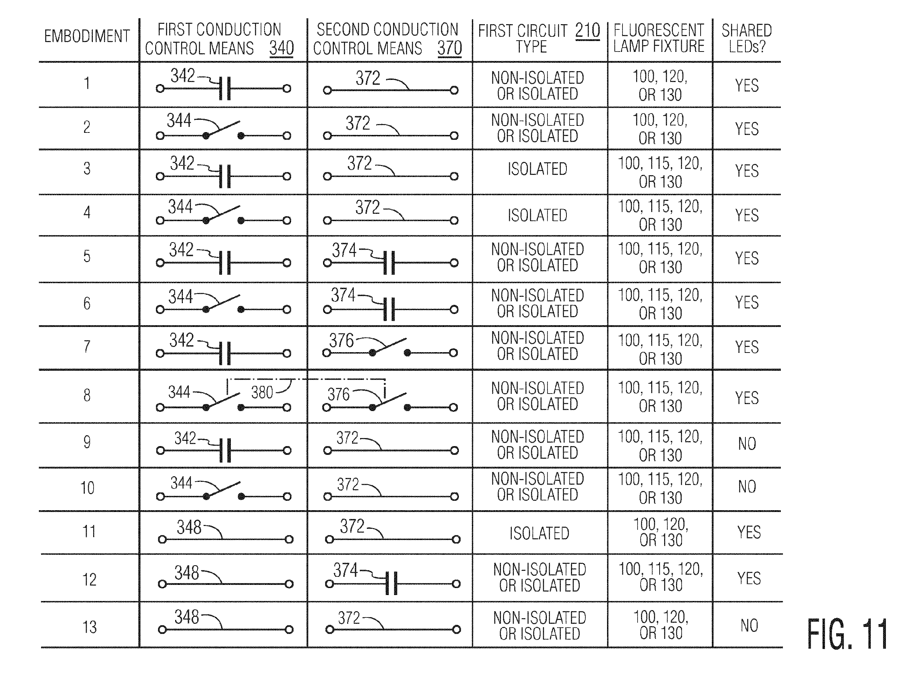

FIG. 11 shows a tabular listing of Embodiments 1-13. The tabular listing includes a column referring to the need for an isolated or non-isolated type of first circuit 210 shown in FIGS. 5, 8 and 9. Another column in the tabular listing mentions which of fluorescent lamp fixtures 100 (FIG. 1) 115 (FIG. 2), 120 (FIG. 3) or 130 (FIG. 4) are associated with each embodiment. A further column mentions, for each embodiment, whether such embodiment shares LEDs or does not share LEDs in the sense of powering such LEDs for illumination along a length of LED lamp 102. Circuitries 200 (FIG. 5), 700 (FIG. 8) and 800 (FIG. 9) share LEDs as between first and second circuits 210 and 280, and circuitry 1000 (FIG. 10) does not share LEDs as between first and second circuits 210 and 280.

### Embodiments 1-13

For all Embodiments 1-13 as indicated in FIG. 10, the following First Conduction Control Functions can be achieved according to the following table:

| **Realization of First Conduction Control Means 340** | **First Conduction Control Means Functions 340** |
|---|---|
| Capacitor 344 | (1)-(4) |
| Switch 342 | (1)-(2) and (4) |
| Short circuit 348 | (1) |

As is well known in the art, capacitor 342 may more generally be referred to as a capacitance. The more general term "capacitance" covers the use of multiple capacitors to achieve a desired capacitance.

For all Embodiments 1-13 as indicated in FIG.11, the following Second Conduction Control Functions can be achieved according to the following table:

| **Realization of Second Conduction Control Means 370** | **Second Conduction Control Means 370 Functions** |
|---|---|
| Capacitor 374 | (1)-(4) |
| Switch 376 | (1)-(2) and (4) |
| Short circuit 372 | (1) |

Short circuits 342 and 348 of first and second conduction control means 340 and 370 are included in the phrase "conduction control means" as used herein. However, the "control" aspect of short circuits 342 and 348 is to always be conductive. This contrasts with "control" of a switch, for instance, which can alternately be conducting and non-conducting.

Further, short circuit 342 of first conduction control means 340 is intended to enable conduction between second power connector pin 106 and second circuit 280. Similarly, short circuit 348 of second conduction control means 370 is intended to enable conduction between third power connector pin 124 and second circuit 280.

For all Embodiments 1-13, reference is made to the tabular listing in FIG. 11, whose contents will not necessarily be repeated here. For all Embodiments 1-13, it is desirable to provide a warning on product packaging, etc., indicating that lamp installation or removal should proceed only when mains power to the fluorescent lamp fixture has been turned off.

Embodiments 1-2 and 11-13 may not achieve shock hazard protection discussed above as possible functions of the first and second current conduction control means 340 or 370. This is because Embodiments 1, 2 and 11-13 realize first conduction control means 340 as a short circuit 348. Therefore, with these embodiments, it is especially important to provide the warning on product packaging, etc., mentioned above.

In regard to Embodiments 9 and 10, both of which relate to circuitry 1000 of FIG. 10, FIG. 11 shows two possible combinations of first and second conduction control means 340 and 370. Alternatively, first and second conduction control means 340 and 370 of FIG. 10 could be embodied in the same way that FIG. 11 shows for Embodiments 5-8, by way of example.

In regard to Embodiments 5-10, although it is preferred to use a less costly first circuit 210 that is non-isolated, a more costly first circuit 210 that is isolated could also be used.

Referring to FIG. 11, Embodiment 11 realizes first and second conduction control means 340 and 370 as short circuits 348 and 372, respectively. By avoiding fluorescent lamp fixture 115 (FIG. 2) that provides mains power to all four power connector pins 104, 106, 124 and 126, and by making first circuit 210 of the isolated type, the following advantage is attained: non-interference by the second circuit 280 with the first circuit 210.

Embodiment 12 uses an isolated type of first circuit 210, and avoids use of fluorescent lamp fixture 115 (FIG. 2) that provides mains power to all four power connector pins 104, 106, 124 and 126, to attain the following advantage: non-interference by the second circuit 280 with the first circuit 210.

Embodiment 13, in which first and second conduction control means 340 and 370 are realized as short circuits 348 and 372, respectively, relies on the non-sharing of LEDs, in the sense of powering such LEDs for illumination along a length of LED lamp 102 to attain the following advantage: non-interference by the second circuit 280 with the first circuit 210.

Referring to FIG. 11, switches 344 and 376 can be implemented in various forms. They could constitute mechanical switches, and in Embodiment 8 that uses both switches, it is preferable for the switches to be mechanically coupled to each other, as indicated by phantom line 380, so that controlling one switch controls both switches. This type of mechanical switch is known as a double-pole-single-throw switch. Switches 344 and 376 could alternatively be configured as electronic switches such as FETs, for instance, that are in a non-conducting state when not energized.

For safety, it is desirable for any switches used to realize first or second conduction control 340 or 370 to be provided to an installer in an open, or non-conducting, state. Once an installer verifies that a lamp will be installed in either fluorescent lamp fixture 100 (FIG. 1) or 115 (FIG. 2), the switches should remain open. In contrast, once an installer verifies that a lamp will be installed in either fluorescent lamp fixture 120 (FIG. 3) or 130 (FIG. 4), the switches should then be closed.

The following is a list of reference numerals and associated parts as used in this specification and drawings:

| **Reference Numeral** | **Part** |
|---|---|
| 100 | Fluorescent lamp fixture |
| 102 | LED lamp |
| 104 | First power connector pin |
| 105 | Power receptacle |
| 106 | Second power connector pin |
| 107 | Power receptacle |
| 108 | Electrical short |
| 109 | Power source |
| 110 | LED power supply |
| 115 | Fluorescent lamp fixture |
| 120 | Fluorescent lamp fixture |
| 122 | Fluorescent lamp electronic ballast |
| 123 | Fluorescent lamp electronic ballast |
| 124 | Third power connector pin |
| 125 | Power receptacle |
| 126 | Fourth power connector pin |
| 127 | Power receptacle |
| 128 | Electrical short |
| 130 | Fluorescent lamp fixture |
| 200 | Circuitry |
| 210 | First circuit |
| 220 | Isolated power supply |
| 222 | Output |
| 224 | Output |
| 228 | Isolation transformer |
| 230 | Full-wave rectifier circuit |
| 232 | Field effect transistor |
| 233 | Gate |
| 240 | Flyback diode |
| 242 | Capacitor |
| 250 | Non-isolated power supply |
| 252 | Field effect transistor |
| 253 | Gate |
| 254 | Capacitor |
| 256 | Inductor |
| 258 | Capacitor |
| 260 | Diode |
| 266 | Imaginary cut |
| 268 | Imaginary cut |
| 280 | Second circuit |
| 282 | Rectifier circuit |
| 300 | LEDs |
| 302 | LEDs |
| 304 | LEDs |
| 310 | Electrolytic capacitor |
| 340 | First conduction control means |
| 342 | Capacitor |
| 344 | Switch |
| 348 | Short circuit |
| 370 | Second conduction control means |
| 372 | Short circuit |
| 374 | Capacitor |
| 376 | Switch |
| 380 | Electrical or mechanical coupling |
| 800 | Circuitry |
| 802 | Node |
| 804 | Node |
| 900 | Circuitry |
| 902 | Node |
| 904 | Node |
| 1000 | Circuitry |

The foregoing describes an LED lamp that can be retrofit into an existing fluorescent lamp fixture and that has dual mode operation from an existing fluorescent lamp electronic ballast associated with the lamp fixture, as well as, alternatively, directly from power mains. Beneficially, the LED lamp can be configured to mitigate a potentially life-threatening electrical shock hazard when such a lamp is placed into a fixture wired to supply power directly from power mains. Some embodiments of the inventive lamp are configured to provide additional protection against shock exposure to a lamp installer.

The scope of the claims should not be limited by the preferred embodiments and examples, but should be given the broadest interpretation consistent with the written description as a whole.

## Claims

1. An LED lamp with dual mode operation from a fluorescent lamp fixture wired to supply either mains power or power from an electronic ballast supplying AC power at a ballast frequency, comprising:
a) an elongated housing having first and second ends;
b) a first end of the elongated housing being provided with first and second power connector pins;
c) a second end of the elongated housing being provided with a third power connector pin;
d) a first circuit intended to provide primary power to at least one LED that is for being powered in a first mode and that provides light along a length of the elongated housing; the first mode occurring when the LED lamp is inserted into a fluorescent lamp fixture having electrical receptacles that receive the first and second power connector pins and that are directly connected to power mains supplying power at a mains frequency much lower than the ballast frequency; the first circuit limiting current to the at least one LED for being powered in a first mode;
e) a second circuit intended to provide primary power to at least one LED that is for being powered in a second mode and that provides light along a length of the elongated housing; the second mode occurring when the LED lamp is inserted into a fluorescent lamp fixture having electrical receptacles that receive the second and third power connector pins, at opposite lamp ends, and that are connected to said electronic ballast for receiving power therefrom; the second circuit including a rectifier circuit that receives power from the second and third power connector pins;
f) a first conduction control means serially connected between the second power connector pin and the rectifier circuit for permitting the second circuit to power the at least one LED for being powered in the second mode when the second and third power connector pins, at opposite lamp ends, are connected to said electronic ballast; and
g) a second conduction control means serially connected between the third power connector pin and the rectifier circuit for permitting the second circuit to power the at least one LED for being powered in the second mode when the second and third power connector pins, at opposite lamp ends, are connected to said electronic ballast.

2. The LED lamp of claim 1, wherein:
a) the at least one LED for being powered in a first mode and the at least one LED for being powered in a second mode have at least one LED in common; and
b) the first conduction control means prevents an interfering level of mains power from reaching the second circuit via the second power connector pin when operation of the first circuit is enabled by direct connection of the first and second power connector pins to power mains supplying power at a mains frequency; said interfering level of mains power defined by flicker-type deviation of light from the at least one LED for being powered in the first mode in the frequency range of 0.1 Hz to 200 Hz of at least 10 percent and continuous-type deviation of light from the at least one LED for being powered in the first mode of at least 10 percent when the flicker-type and continuous-type deviations are compared to the average luminous intensity of light of the at least one LED for being powered in the first circuit mode that would arise from the first circuit being standalone.

3. The LED lamp of claim 1, wherein:
a) the at least one LED for being powered in a first mode and the at least one LED for being powered in a second mode have at least one LED in common; and
b) the second conduction control means prevents an interfering level of mains power from reaching the second circuit via the third power connector pin when operation of the first circuit is enabled by direct connection of the first and second power connector pins to power mains supplying power at a mains frequency; said interfering level of mains power defined by flicker-type deviation of light from the at least one LED for being powered in the first mode in the frequency range of 0.1 Hz to 200 Hz of at least 10 percent and continuous-type deviation of light from the at least one LED for being powered in the first mode of at least 10 percent when the flicker-type and continuous-type deviations are compared to the average luminous intensity of light of the at least one LED for being powered in the first circuit mode that would arise from the first circuit being standalone.

4. The LED lamp of claim 1, wherein the first conduction control means is configured, for each exposed power connector pin, to prevent current conduction at the mains frequency in an amount exceeding 10 milliamps rms when measured through a non-inductive 500 ohm resistor connected directly between said each exposed power connector pin and earth ground, for each of the following situations involving first and second ones of a pair of power connector pins on an opposite end of the lamp that are associated with first and second power receptacles that receive mains power from said fixture:
a) a first one of said pair of power connector pins is inserted into the first power receptacle and no power connector pin is inserted into the second power receptacle;
b) the first one of said pair of power connector pins is inserted into the second power receptacle and no power connector pin is inserted into the first power receptacle;
c) a second one of said pair of power connector pins is inserted into the first power receptacle and no power connector pin is inserted into the second power receptacle;
d) the second one of said pair of power connector pins is inserted into the second power receptacle and no power connector pin is inserted into the first power receptacle;
e) the first one of said pair of power connector pins is inserted into the first power receptacle and the second one of said pair of power connector pins is inserted into the second power receptacle; and
f) the second one of said pair of power connector pins is inserted into the first power receptacle and the first one of said pair of power connector pins is inserted into the second power receptacle.

5. The LED lamp of claim 1, wherein the second conduction control means is configured, for each exposed power connector pin, to prevent current conduction at the mains frequency in an amount exceeding 10 milliamps rms when measured through a non-inductive 500 ohm resistor connected directly between said each exposed power connector pin and earth ground, for each of the following situations involving first and second ones of a pair of power connector pins on an opposite end of the lamp that are associated with first and second power receptacles that receive mains power from said fixture:
a) a first one of said pair of power connector pins is inserted into the first power receptacle and no power connector pin is inserted into the second power receptacle;
b) the first one of said pair of power connector pins is inserted into the second power receptacle and no power connector pin is inserted into the first power receptacle;
c) a second one of said pair of power connector pins is inserted into the first power receptacle and no power connector pin is inserted into the second power receptacle;
d) the second one of said pair of power connector pins is inserted into the second power receptacle and no power connector pin is inserted into the first power receptacle;
e) the first one of said pair of power connector pins is inserted into the first power receptacle and the second one of said pair of power connector pins is inserted into the second power receptacle; and
f) the second one of said pair of power connector pins is inserted into the first power receptacle and the first one of said pair of power connector pins is inserted into the second power receptacle.

6. The LED lamp of claim 1, wherein the first circuit is an active circuit and the second circuit is a passive circuit.

7. The LED lamp of claim 1, wherein the number of at least one LED for being powered in a first mode is higher than the number of the at least one LED for being powered in a second mode.

8. The LED lamp of claim 1, wherein the number of at least one LED for being powered in a second mode is higher than the number of the at least one LED for being powered in a first mode.

9. The LED lamp of claim 1, wherein:
a) the first circuit includes an isolation transformer situated between inputs for receiving mains power and outputs that provide conditioned power to the at least one LED for being powered in a first mode; and
b) the isolation transformer prevents mains power from passing through the second circuit and interfering with the first circuit during the first mode of operation.

10. The LED lamp of claim 1, wherein:
a) the first and second circuits are configured so that the at least one LED for being powered in the first mode and the at least one LED for being powered in the second mode are separate from each other; and
b) the second circuit is configured to avoid, during the first mode of operation, powering the at least one LED for being powered during the first mode.
